# EUROPEAN PATENT APPLICATION

(11) **EP 1 434 136 A1**
(43) Date of publication of application: **30.06.2004**
(21) Application number: 02029024.3
(22) Date of filing: 27.12.2002
(51) Int. Cl.: G06F 12/08

(54) **Microprocessor with cache memory and secondary memory, and method for programming such a microprocessor**

(71) Applicant: SIEMENS AKTIENGESELLSCHAFT, 80333 München (DE)
(72) Inventor: Kabatek, Ulrich, Dr., 64832 Babenhausen (DE); Schubert, Thomas, 64584 Biebesheim (DE); Wieczorek, Darius, 63073 Offenbach (DE)

(57) **Abstract**

A microprocessor with a cache memory facility, a secondary memory facility and an address comparator for directing only access addresses at one side of a threshold to cache memory, and having control code that has been moved to said one side e.g. through linker directives, and a data processing system comprising such microprocessor embedded, and to a method for programming such microprocessor

A microprocessor has a processing facility, a cache memory facility, a secondary memory facility, an interconnection facility for linking the other facilities recited and a control facility for selectively effecting memory accesses on the cache memory facility or on the secondary memory facility as being based on a memory access content.

In particular, the control facility comprises a single address comparator for containing a discrimination threshold value, for thereby directing access addresses at one side of the threshold to the cache memory whilst directing all other access addresses to the secondary memory facility. The microprocessor furthermore comprises inner loop control code that through linker directives has been moved to the one side of the threshold.

## Description

A microprocessor with a cache memory facility, a secondary memory facility and an address comparator for directing only access addresses at one side of a threshold to cache memory, and having control code that has been moved to said one side e.g. through linker directives, and a data processing system comprising such microprocessor embedded, and to a method for programming such microprocessor

The invention relates to a microprocessor comprising a processing facility, a cache memory facility, a secondary memory facility, an interconnection facility for linking the other facilities recited and a control facility for selectively effecting memory accesses on said cache memory facility or on said secondary memory facility as being based on a memory access content, as being recited in the preamble of Claim 1.

Generally, the content supra represents a ***memory address.*** Data processing generally operates through a hierarchy of storage facilities, ranging from large and slow to small and fast. The present invention in particular considers the interface between the processing facility with its limited set of ***registers,*** and on the other hand matrix-based memories, such as in particular ***flash memories or otherpersistent* memories**. Especially the slow access to program code forms a bottleneck, where the data path width is often restricted to sixteen bits, and usually several wait-states are involved.

Prior art has proposed various solutions to this problem. A first one would include the use of a large effective cache, such as an ***n-way associative cache*,** but these are expensive. Generally, the idea is to reduce the size of the cache for reasons of cost. Now, a "normal" cache will cache all memory accesses and therefore, also Non-Local memory accesses. This may include accesses like interrupt routines that will need some space and will remove some local code from the cache. Inasmuch as the local code will at this moment be called many times, and cache access hits are fasting than getting the same information from memory, it is preferred to keep the local code in the cache. Note that getting the data from memory is slower because cache will be loading again. The known procedure renders the cache inefficient, inasmuch as cache content gets displaced through the cache.

A further approach is to use ***fast RAM*** for inner loops. Generally, this would not be feasible, because the size of such RAM is too small for the sum of all relevant code items. Improvement could also be attained through manual swapping of code into and out of fast RAM, but this procedure may cause many bugs and other risks.

The inventors have recognized that the execution frequency of various code parts may differ by orders of magnitude. In consequence, restricting the caching to certain categories of code, such as inner loops, could represent already most of the advantages gathered by larger-scale caching.

In consequence, amongst other things, it is an object of the present invention to provide a microprocessor that limits caching substantially to such code items that are executed repeatedly, whilst letting other code reside in secondary storage.

Now therefore, according to one of its aspects, the invention is characterized in that said control facility comprises a single or multiple ddress comparator for containing a discrimination threshold value, for thereby directing access addresses at one side of said threshold to said cache memory whilst directing all other access addresses to said secondary memory facility, said microprocessor furthermore comprising control code that e.g. through linker directives has been moved to said one side of said threshold.

An embodiment of a microprocessor according to the invention is characterized in that said linker directives represent a default mode whereas directing of other access addresses is controlled by a non-default mode.

An embodiment of a microprocessor according to the invention is characterized in that said cache just caches control or executable code and no variable data.

An embodiment of a microprocessor according to the invention is characterized in that said control facility allows runtime adjusting of said discrimination threshold value.

An embodiment of a microprocessor according to the invention is characterized in that said comparison is effected at one of ***before*** the "standard cache", ***behind*** the cache, whilst loading cacheable data only in case of a cache miss, and ***inside*** the cache.

An embodiment of a microprocessor according to the invention is characterized in that it is arranged for mapping the secondary (flash) memory address space twice, both once directly into the address space of the CPU, and also once through the cache, wherein a ROM side of the secondary memory is associated to a multiplexing/dual port facility.

An embodiment of a microprocessor according to the invention is characterized in that said single address comparator has at least one associate register for a further

An embodiment of a microprocessor according to the invention is characterized by further being arranged to provide for storing at least two discrimination values that represent upper and lower dynamically software-adjustable cache limits to therebetween fit inner loops of a current major task.

An embodiment of a microprocessor according to the invention is characterized in that said discrimination threshold value disregards a string of lower significant address bits.

An embodiment of a microprocessor according to the invention is characterized by a tuning facility for adjusting the cache limit(s) either during runtime, or as based on different runs of the program to find an optimum static settting.

An embodiment of a microprocessor according to the invention is characterized by a "create linker instructions" facility for thereby moving selected code modules to and from cacheable and non-cacheable areas of the memory, respectively.

An embodiment of a microprocessor according to the invention is characterized by a "configure cache limit(s)" facility, as being represented by only one or multiple numbers.

An embodiment of a microprocessor according to the invention is characterized in that said discrimination threshold level has a fixed value.

An embodiment of a microprocessor according to the invention is characterized by said secondary memory being a flash memory or other persistent memory.

An embodiment of a microprocessor according to the invention is being executed as an embedded microprocessor.

The invention also relates to a data processing system comprising an embedded microprocessor as claimed in Claim 1, and to a method for programming such microprocessor. Further advantageous aspects of the invention are recited in dependent Claims.

These and further features, aspects and advantages of the invention will be discussed more in detail hereinafter with reference to the disclosure of preferred embodiments of the invention, and in particular with reference to the appended Figures that illustrate:
- Figure 1,: a basic block diagram of an embedded microcontroller;
- Figure 2,: a block diagram of the basic facilities that are pertinent to the invention;
- Figure 3,: a bitwise embodiment of an integrated solution with a direct-mapped cache;
- Figure 4,: a block diagram of a software development process with tunable cache.

In the following description, well known circuits have been shown in block diagram form in order not to obscure the present invention in unnecessary detail. For the most part, details such as concerning timing and processing considerations and the like have been omitted inasmuch as such details are not necessary to obtain a complete understanding of the present invention and are within the skill of persons of ordinary skill in the relevant art.

Reference will now be made to the drawings, wherein depicted elements are not necessarily shown to scale and wherein like or similar elements are designated by the same reference numeral through the several views.

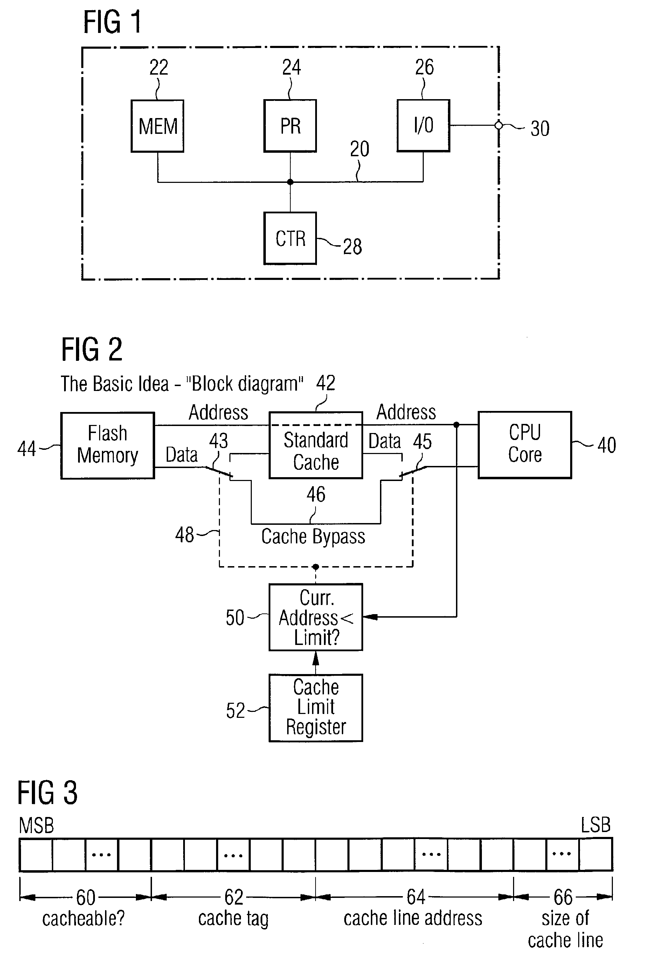

Figure 1 illustrates a basic block diagram of a microprocessor. The building blocks thereof are Processing facility or CPU 24, Memory facility 22, I/O facility 26 interconnecting to external terminal 30, Control facility 28, and internal Bus facility 20. Often, control (28) effectively represents part of the CPU (24). Various further building blocks that could be present have not been illustrated for brevity. The microprocessor may be embedded in a larger structure, for example in an image processing environment, or rather be stand-alone.

Figure 2 illustrates a block diagram of the basic facilities that are pertinent to the invention, and as such represents a major part of the microprocessor shown in Figure 1. Here, flash memory 44 stores data at respective addresses. The addresses are generated by the CPU core 40 during execution of code. As regards the handling thereof in memory proper, code and data are identical categories. As regards the CPU, code generally ***dictates*** the operations, whereas data are the ***object*** of those operations. Certain code instructions are executed frequently, such as pixel copying in image processing. Other code instructions are executed less frequently, such as to find the first address of an image array.

Now, in first instance, item 42 is a standard cache, that has immediate addressing by CPU core 40. Flash memory 44 has addressing through cache 42. Cache 42 can in principle receive data from CPU core 40, as well as output both data and code to CPU core 40. Furthermore, cache 42 has a similar interfacing to flash memory 44. This allows for updating of the content of cache 42, such as when dynamic loading with another part of memory's content could improve performance. Furthermore, cache bypass 46 allows immediate accessing of memory 44. The bypassing is controlled by control interconnection 48 that emanates from comparator 50. Cache Limit Register 52 stores a discrimination limit or threshold. When receiving an address from CPU core 40, comparator 50 compares the address so received with the address stored, and on the basis thereof enables bypass 46, or rather disables bypass 46. The enabling/disabling has been indicated by symbolic switches controlled by interconnection 48. ***Equality*** of the two compared entities may either enable or disable the bypass.

In case the address is not present in cache, this would allow faster accessing of background flash memory 44. A well-organized address structure pertaining to cacheable code will be explained hereinafter. Now, the above comparison can be done ***before*** the "standard cache", as shown in Figure 2. An alternative is to have the comparison ***behind*** the cache, and load cacheable data only in case of a cache miss. In this setup, the address line would branch off to block 50 at the left hand side of the cache. A further alternative is to have the comparison ***inside*** the cache, as has been exemplified in Figure 3. In this setup, blocks 50, 52 would represent an internal part of cache block 42.

Figure 3 illustrates a bitwise embodiment of an integrated solution with a direct-mapped cache. By themselves, persons skilled in the art will recognize that such direct-mapped cache is prior art technology. The address bits have been ranged from left (MSB) to right (LSB). The respective numbers of bits have not been specified in particular. Now, the first subset 60 of bits specifies whether the memory item is ***cacheable*** indeed, in that the address is in a cacheable range of addresses. The second subset 62 of bits specifies the ***cache tag*** indicating whether the addressed memory item is currently present in the cache. The third subset 64 of bits indicates the ***cache line address,*** indicating the location inside the cache proper. The fourth subset 66 of bits indicates the ***size of a cache line,*** such as a word.

Now, various options can be used as extensions of the basic approach according to the present invention. If enough cache is available, in relation to the size of the program actually considered, the basic strategy could be that inclusion in the cache represents a default, whereas only specific code would be ***excluded*** from caching. Furthermore, data items will usually be excluded from being cached. The cache limit specified in register 52 of Figure 2 could be dynamically adjusted during runtime. Loading of registers has not been disclosed specifically herein, inasmuch as register load is a standard operation in data processing.

Furthermore, the single address comparator 50 may have an associate register not shown in Figure 2, for storing therein a second discrimination value. The two discrimination values will then be representing upper and lower dynamically software-adjustable cache limits to fit inner loops of a current, and in particular, a major task. Note that the usage of two registers and/or dynamically adjustment represent TWO independent possibilities. In such case, block 50 would then form a logic function, such as OR, to thereby control the cache bypass. As an embodiment, the discrimination threshold value can disregard a string of lower significant address bits, so that the limit is page-oriented, with LSBs = 0. Even an elementary solution wherein the discrimination threshold level has a preset value can represent a useful solution, alone or in combination with various other aspects.

A still alternative approach is to simply map the flash memory address space twice into the address space of the CPU, once directly, and once through the cache. From the CPU perspective, these will then be two memories with separate chip-select facilities, just like a RAM/ROM combination. The only complication is that the flash ROM side stays "special", and needs multiplexing/dual port for realization.

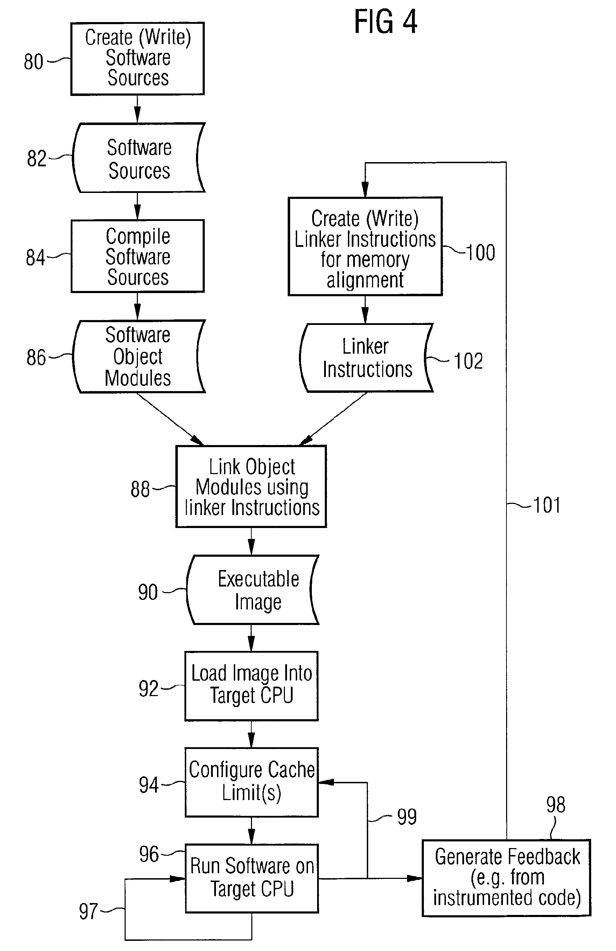

Figure 4 illustrates a block diagram of a software development process with tunable cache. In block 80, various software sources are created or written, and subsequently stored for access in block 82. In block 84 the various sources are compiled, so that they could in principle be executed collectively. In block 86, the compilation is separated into software modules and stored for subsequent access. In block 88, various object modules are linked through the usage of ***linker*** ***instructions***. In block 90, this will result in a stored program image that is executable in practice. In block 92, the executable image is loaded into target CPU, such as shown in Figure 1, supra. In block 94, the cache limits are configured. In block 96, the software so loaded is run on the target CPU. The repeatability has been symbolized by loop connection 97.

Further to the above, in block 100 the procedure creates or writes linker instructions for memory alignment. The linker instructions are stored in block 102 and subsequently used in block 88 discussed above.

Now, the present invention undertakes to optimize the effectiveness of caches such as in embedded systems. Caches, and in particular instruction caches work efficiently when the software executes in a repetitive or "loopy" manner. Without a cache, the instructions comprised in the loop must be loaded from instruction memory over and over again, which usually causes delays at each load operation. The present proposal therefore undertakes to concentrate caching (only) on those parts of the software where it will be most effective. These parts are foremostly such innermost loops that are executed most frequently. An example would be for a graphics display that copies a bitmap on the display. There, the inner loop would represent the routine copying e.g. of a single pixel from the bitmap to the display controller. This routine would typically be called hundreds of times in a single row. The putting of this routine in cache requires very few cache memory cells, and still will accelerate the copying process substantially.

In the flowchart, the part discussed above is in general always necessary. Looping arrow 99 is necessary for the optional tuning process, for adjusting the cache limit(s) either during runtime, or for different runs of the program to find an optimum static settting. The remainder (block 98 and retrocoupling 101) are for optionally tuning the memory alignment using feedback information from complete runs of the program. The selection could be effected through statistical considerations. From the Figure it would be clear that both options could be combined, or rather operate separately.

In the procedure of Figure 4, the most relevant operations are "create linker instructions" in block 100 and "configure cache limit(s)" in block 94. The creation of the linker instructions has many degrees of freedom, inasmuch as any code module can be moved to and from the cacheable and non-cacheable areas of the memory, respectively. The cache limit is represented by only one or two numbers.

The effect of the present invention on the development process can be given as follows. "Inner loops" of critical software modules are put into separate files to enable separate linker sections.

Optimization & tuning of the cache will be done during the integration progress in a sequence of two steps.
- First, profiling of code leads to candidate sections for caching; these, generally small, inner loops are then shifted by linker directives to the "cacheable" end (upper or lower) of the address space; re-linking is only necessary for changing.
- Furthermore, benchmarking with different values for Cache Limit Register to find optimum setting. Change can be effected e.g. by a diagnosis command at runtime.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A microprocessor comprising a processing facility, a cache memory facility, a secondary memory facility, an interconnection facility for linking the other facilities recited and a control facility for selectively effecting memory accesses on said cache memory facility or on said secondary memory facility as being based on a memory access content,
**characterized in that** said control facility comprises a single or multiple ddress comparator for containing a discrimination threshold value, for thereby directing access addresses at one side of said threshold to said cache memory whilst directing all other access addresses to said secondary memory facility, said microprocessor furthermore comprising control code that e.g. through linker directives has been moved to said one side of said threshold.

2. A microprocessor as claimed in Claim 1, **characterized in that** said linker directives represent a default mode whereas directing of other access addresses is controlled by a non-default mode.

3. A microprocessor as claimed in Claim 1, **characterized in that** said cache just caches control or executable code and no variable data.

4. A microprocessor as claimed in Claim 1, **characterized in that** said control facility allows runtime adjusting of said discrimination threshold value.

5. A microprocessor as claimed in Claim 1, **characterized in that** said comparison is effected at one of before the "standard cache" (Figure 2), ***behind*** the cache, whilst loading cacheable data only in case of a cache miss, and ***inside*** the cache (Figure 3).

6. A microprocessor as claimed in Claim 1, **characterized in that** it is arranged for mapping the secondary (flash) memory address space twice, both once directly into the address space of the CPU, and also once through the cache, wherein a ROM side of the secondary memory is associated to a multiplexing/dual port facility (43, 45).

7. A microprocessor as claimed in Claim 1, **characterized in that** said single address comparator has at least one associate register for a further

8. A microprocessor as claimed in Claim 1, **characterized by** further being arranged to provide for storing at least two discrimination values that represent upper and lower dynamically software-adjustable cache limits to therebetween fit inner loops of a current major task.

9. A microprocessor as claimed in Claim 1, **characterized in that** said discrimination threshold value disregards a string of lower significant address bits.

10. A microprocessor as claimed in Claim 1, **characterized by** a tuning facility (99) for adjusting the cache limit(s) either during runtime, or as based on different runs of the program to find an optimum static settting.

11. A microprocessor as claimed in Claim 1, **characterized by** a "create linker instructions" facility (102) for thereby moving selected code modules to and from cacheable and non-cacheable areas of the memory, respectively.

12. A microprocessor as claimed in Claim 1, **characterized by** a "configure cache limit(s)" facility (94), as being represented by only one or multiple numbers.

13. A microprocessor as claimed in Claim 1, **characterized in that** said discrimination threshold level has a fixed value.

14. A microprocessor as claimed in Claim 1, **characterized by** said secondary memory being a flash memory or other persistent memory.

15. A microprocessor as claimed in Claim 1, and being executed as an embedded microprocessor.

16. A data processing system comprising an embedded microprocessor as claimed in Claim 1.

17. A method for moving code in an address space for so programming a microprocessor as claimed in Claim 1.
